# EUROPÄISCHE PATENTSCHRIFT

(11) **EP 0 418 558 B1**
(45) Veröffentlichungstag und Bekanntmachung des Hinweises auf die Patenterteilung: **24.02.1993**
(21) Anmeldenummer: 90115756.0
(22) Anmeldetag: 17.08.1990
(51) Int. Cl.: B64D 43/00, G01C 23/00, G06F 15/50, G06G 7/78, G09F 9/00

(54) **Verfahren und Einrichtung zur Darstellung von Flugführungsinformation**
Method and device for displaying flight information
Méthode et dispositif pour la représentation des informations du vol

(30) Priorität: 15.09.1989 DE 3930862
(43) Veröffentlichungstag der Anmeldung: 27.03.1991
(73) Patentinhaber: VDO Luftfahrtgeräte Werk GmbH, D-60423 Frankfurt (DE)
(72) Erfinder: Mensen, Heinrich, Prof. Dr.-Ing., D-6000 Frankfurt/Main 70 (DE); Below, Christian, Dipl.-Ing., D-1000 Berlin 28 (DE); von Viebahn, Harro, D-6100 Darmstadt-Eberstadt (DE); Kling, Heribert, D-6000 Frankfurt 60 (DE); Kubbat, Wolfgang, Prof. Dr. Ing., D-6104 Seeheim Jugenheim (DE)
(74) Vertreter: Gornott, Dietmar, Dipl.-Ing.

(56) Entgegenhaltungen:
- EP-A- 0 044 777
- EP-A- 0 292 902
- US-A- 4 081 209
- US-A- 4 247 843
- PROCEEDINGS OF THE 1988 IEEE INTERNATIONAL CONFERENCE ON SYSTEMS, MAN & CYBERNETICS 8. - 12. August 1988, Seiten 506-509, Beijing & Shenyang, China; C.D. WICKENS et al.: "Perspective Flight Path Displays: Application of Ergonomically Driven Display Design Principles"
- EOSD - ELECTRO-OPTICAL SYSTEMS DESIGN Band 13, Nr. 7, Juli 1981, Seiten 31-41, Chicago, US; A.R. TEBO et al.: "Cockpit Displays - Works of Ingenuity and Splendor "

## Beschreibung

Die Erfindung betrifft ein Verfahren und eine Einrichtung zur Darstellung von Flugführungsinformation eines Flugzeugs, wobei mit Hilfe einer Bildwiedergabeeinrichtung eine räumliche Darstellung des Flugraums mit mindestens einem Horizont erfolgt.

Als Flugraum wird die dreidimensionale Umgebung bezeichnet, die den Luftraum vor dem Flugzeug und relevante und daher gegebenenfalls auf dem Schirmbild darzustellende Teile des Bodens umfaßt. Die Abbildung der dreidimensionalen Umgebung erfolgt als "Inside-out-view", mit der die Flugzeugposition zu anderen räumlichen Objekten in Relation gesetzt werden kann.

Im Cockpit eines Flugzeugs werden dem Piloten viele zur Flugführung relevante Informationen angezeigt, dazu besteht die übliche Instrumentierung aus einer Vielzahl von Zeigerinstrumenten und Kontrolleuchten, die in neuen Flugzeugtypen im wesentlichen auch durch Bildschirme (Kathodenstrahlröhren und LCD-Anzeigen) ergänzt bzw. ersetzt werden.

Zur Aufnahme der angezeigten Informationen durch den Piloten ist ein sequentielles Abtasten der Instrumente nach einem erlernten Schema und deren mentale Zusammensetzung zu einem Gesamtbild der Flugsituation erforderlich. Dieser Informationsaufnahme- und -verarbeitungsprozeß muß ständig wiederholt werden, um den Flugverlauf beobachten und steuern zu können.

Mit der Einführung von Bildschirmen wurde auch die Informationsdarstellung verbessert. So ist beispielsweise in Proceedings of the 1988 IEEE International Conference on Systems, Man & Cybernetics, Seiten 506-509 eine perspektivische Darstellung eines Flugweges beschrieben, in welches ein Flugzeugsymbol eingesetzt ist, das das Flugzeug in einer vorausberechneten Position darstellt. Ähnliche Flugzeugsymbole werden zusammen mit anderen Informationen in US-A-4 247 843, EP-A-0 292 902 und EP-A-0 044 777 vorgeschlagen. An diesen Darstellungen als Flugzeugsymbol sind jedoch die voraussichtliche Position und die voraussichtliche Lage des Flugzeugs nicht mit der erforderlichen Genauigkeit und Sicherheit erkennbar.

Aufgabe der vorliegenden Erfindung ist es, die Anzeige von zur Flugführung erforderlichen Daten derart zu verbessern, daß die Informationsaufnahme und -verarbeitung vereinfacht werden. Insbesondere soll das voraussichtliche Verhalten des Flugzeuges leicht erkennbar sein.

Das erfindungsgemäße Verfahren ist dadurch gekennzeichnet, daß die räumliche Darstellung ferner die vorausberechnete Flugbahn des Flugzeugs mit vorausberechneten Positionen und vorausberechneten Lagen des Flugzeugs zu verschiedenen Zeitpunkten umfaßt.

Das Verfahren ist Gegenstand des Anspruchs 1; die dazugehörige Einrichtung ist inhalt des Anspruchs 41.

Das erfindungsgemäße Verfahren verbessert den Prozeß der Informationsvermittlung durch ein den natürlichen Sehgewohnheiten nachempfundenes Bild, so daß auch die mentale Belastung des Piloten verringert wird. Ferner stellt die verwendete Symbolik eine integrale Information dar, die die Kontrolle von Lage und Bewegung im Raum und das Einhalten von Flugbahnvorgaben und Kurzzeitnavigation ermöglicht. Die qualitativen Informationen treten bedingt durch die Darstellungsweise in den Vordergrund und werden durch die notwendigen quantitativen Anzeigen ergänzt. Eine Erleichterung der Aufgabe des Piloten wird durch eine Zusammenfassung der einzelnen für die Flugphase relevanten Informationen in einem ergonomisch günstig gestalteten Gesamtbild erreicht.

Ferner ermöglicht das erfindungsgemäße Verfahren eine vorausschauende Steuerung des Flugzeugs, wobei die Folgen einer Steuereingabe direkt erkennbar sind. Mögliche unerwünschte Entwicklungen - beispielsweise ein Überziehen beim Start - können erkannt und vermieden werden, bevor sie tatsächlich eintreten. Die Zeit für Reaktionen des Piloten wird verlängert und die Sicherheit dadurch erhöht.

Eine Weiterbildung der Erfindung besteht darin, daß die Darstellung der vorausberechneten Flugbahn für eine Strecke erfolgt, die das Flugzeug in einer vorgegebenen Zeit, vorzugsweise in einigen Sekunden, zurücklegt. Abgesehen davon, daß die vorausberechnete Flugbahn mit der erforderlichen Wahrscheinlichkeit nicht für eine beliebig lange Strecke berechnet werden kann, ergibt sich durch die Weiterbildung der Erfindung der Vorteil, daß bereits die Länge der dargestellten vorausberechneten Flugbahn eine ungefähre Anzeige der Geschwindigkeit bildet.

Ein besonders anschauliches Bild des vorausberechneten Verhaltens des Flugzeugs ergibt sich gemäß einer anderen Weiterbildung dadurch, daß die Darstellung der vorausberechneten Flugbahn aus einer Reihe von Symbolen besteht, welche innerhalb des dargestellten Flugraums die vorausberechnete Position und die vorausberechnete Lage des Flugzeugs in bezug auf den Flugraum zu verschiedenen Zeitpunkten einnehmen.

Vorzugsweise ist dabei vorgesehen, daß ein erstes Symbol bezüglich Höhe und Lage nach der vorausberechneten Flugbahn berechnet wird, daß die Ausrichtung des ersten Symbols nach dem tatsächlichen Steuerkurs erfolgt und daß weitere Symbole nach dem vorausberechneten Kurs über Grund ausgerichtet werden.

Eine vorteilhafte Ausgestaltung der Erfindung besteht darin, daß jeweils ein Symbol von einer dreieckigen Scheibe endlicher Dicke gebildet wird, die in der vorausberechneten Bahn des ausgefahrenen Fahrwerks liegt, wobei eine Spitze in die vorausberechnete Flugrichtung weist. Diese Form des Symbols ermöglicht in besonders einfacher Weise das Erkennen von Lage und Richtung des Flugzeugs zu den jeweiligen Zeitpunkten.

Gemäß einer anderen Weiterbildung der Erfindung sind die Symbole mit von der vorausberechneten Geschwindigkeit abhängiger Farbe versehen. Insbesondere weisen in einem normalen Geschwindigkeitsbereich die Symbole eine erste Farbe, im Bereich der unteren Grenzgeschwindigkeit eine zweite und im Bereich der oberen Grenzgeschwindigkeit eine dritte Farbe auf.

Diese Weiterbildung ermöglicht ein rechtzeitiges Gegensteuern für den Fall, daß bei Beibehaltung der jeweils vorliegenden Steuereingaben innerhalb der nächsten sechs bis acht Sekunden die Geschwindigkeit sich einem der Grenzwerte nähern sollte. So wird beispielsweise der Pilot vor einem Überziehen gewarnt, ohne daß er sich einem weiteren Instrument bzw. einer weiteren Anzeigevorrichtung zuwenden muß. Dazu erfolgt vorzugsweise die Vorausberechnung der Geschwindigkeit aus der gemessenen Eigengeschwindigkeit.

Eine gefährliche Flugsituation kann sich durch Windscherung ergeben bei einer Landung mit starkem Gegenwind, der sich jedoch nicht bis zum Boden erstreckt. Eine frühzeitige Warnung des Piloten vor einer Windscherung ist durch Blinken und/oder einen Farbumschlag mindestens eines Teils der dargestellten vorausberechneten Flugbahn möglich.

Dazu wird vorzugsweise die Eigengeschwindigkeit ständig gemessen. Die Windscherungswarnung erfolgt dann bei einer Änderung der Eigengeschwindigkeit, die nicht Folge von Steuereingaben ist. Die Erzeugung einer Windscherungswarnung kann auf relevante Flugphasen eingeschränkt werden. Im übrigen ist die Erzeugung einer Windscherungswarnung als solche bekannt.

Gemäß einer anderen Weiterbildung ist vorgesehen, daß die Darstellung des Flugraums eine Darstellung des Bodens umfaßt und daß auf dem Boden der von einer gedachten senkrecht über den Symbolen befindlichen Lichtquelle geworfene Schatten der Symbole dargestellt wird.

Mit Hilfe dieser Weiterbildung kann der Pilot die Höhe über dem Boden ablesen, ohne seinen Blick auf ein anderes Instrument richten zu müssen. Insbesondere ist der Pilot in der Lage, die während des Abfangens unmittelbar vor dem Aufsetzen erforderlichen Steuereingaben zum richtigen Zeitpunkt vorzunehmen. So kann er beispielsweise durch die Beobachtung des Abstands zwischen dem Schatten und dem ersten Symbol, welches die erste vorausberechnete Position des Flugzeugs darstellt, und der Farbe der Symbole die Geschwindigkeit sehr genau bei der vorgeschriebenen Höhe reduzieren.

Außerdem kann vorgesehen sein, daß bei Zusammenfallen der Spitze der vorausberechneten Flugbahn und des Schattens ein Warnsignal erzeugt wird. Vorzugsweise umfaßt das Warnsignal mindestens ein Blinken und/oder einen Farbumschlag der vorausberechneten Flugbahn im Bereich der Spitze. Dadurch ist eine Warnung vor einem Bodenkontakt möglich.

Zur Berechnung der vorausberechneten Flugbahn bei dem erfindungsgemäßen Verfahren sind verschiedene Methoden möglich. Insbesondere kann die vorausberechnete Flugbahn aus den Istdaten (Geschwindigkeit, Kurs, Höhe, Steigrate, Lagewinkel) und den auf das Flugzeug einwirkenden Beschleunigungen oder aufgrund eines mathematischen Modells, den Istdaten und den Steuereingaben (Ruderstellungen, Triebwerkleistung) errechnet werden. Dabei kann ferner das mathematische Modell durch Messung der Steuergrößen und des Verhaltens des Flugzeugs während des Fluges verbessert werden. Zur Vorhersage der Flugbahn kann weiterhin die Methode der neuronalen Netze verwendet werden.

Neben der vorteilhaften Ausgestaltung der Darstellung der vorausberechneten Flugbahn kann im Rahmen der Erfindung auch die räumliche Darstellung des Flugraums weitergebildet und an verschiedene Erfordernisse angepaßt werden. Insbesondere wird eine Verbesserung der Orientierung dadurch erreicht, daß die räumliche Darstellung des Flugraums ein erdfestes Bodengitter umfaßt, das geographisch oder magnetisch ausgerichtet ist, und daß die das Gitter bildenden Linien, bezogen auf den Flugraum, einen konstanten Abstand, vorzugsweise eine nautische Meile oder eine geodätische Winkelminute, aufweisen.

Zweckmäßigerweise ist ferner eine Darstellung der jeweils vorhandenen Landebahn(en) vorgesehen. Letztere kann durch die Mittellinie in Anflugrichtung der Landebahn und/oder durch die Darstellung eines Sollweg-Kanals für einen Landeanflug ergänzt werden. Auch weitere Bodenmerkmale, wie Gebirge, Gebäude, Rollbahnen und Verkehrswege können in die räumliche Darstellung des Flugraums einbezogen werden.

Um eine möglichst natürliche Darstellung des Geländes im Bereich des Horizonts zu erreichen, ist gemäß einer Weiterbildung der Erfindung vorgesehen, daß das Gitter nicht bis zum Horizont verläuft und daß die Farbe der zwischen dem Gitter und dem Horizont verbleibenden Fläche an den sich aus der Farbe des Bodens und aus den enger werdenden Linien des Gitters ergebenden Farbeindruck angepaßt ist.

Das am Boden liegende Gitter wird mit zunehmender Flughöhe kleiner, so daß es bei großen Flughöhen weniger deutlich zu erkennen ist. Gemäß einer anderen Weiterbildung der Erfindung ist daher vorgesehen, daß ein maximaler vorgegebener Höhenunterschied zwischen der Position des Flugzeugs und dem Gitter derart vorgesehen ist, daß bei einer Flughöhe oberhalb dieses maximalen Höhenunterschiedes das Gitter vom dargestellten Boden abgehoben und mit der Position des Flugzeugs im vorgegebenen Höhenunterschied bezüglich der Höhe mitgeführt wird. Dabei ist zweckmäßigerweise der Höhenunterschied derart vorgegeben, daß das Gitter noch eine leicht auswertbare Größe aufweist.

Um dabei Irrtümern des Piloten über die Flughöhe vorzubeugen, können Teile des Gitters, die über dem Boden schweben, farblich anders gekennzeichnet sein, als Teile, die auf dem Boden aufliegen. Ferner treten dadurch Bodenerhebungen, die höher als das mit der Flughöhe nachgeführte Gitter sind, deutlich hervor.

Wird das Gitter gemäß einer vorteilhaften Ausführungsform der Erfindung unter Berücksichtigung des Höhenverlaufs des Bodens dargestellt, so werden bei einem "Abheben" des Gitters vom Boden bei Überschreiten einer vorgegebenen Flughöhe zunächst die tiefer gelegenen Teile des Bodens von einem ebenen Gitter überzogen und mit zunehmender Flughöhe die höher gelegenen Teile. Dadurch werden Bergspitzen leicht erkennbar, wenn ihre Höhe bezogen auf die Flughöhe relevant ist.

Um deutlich vor Bodenerhebungen zu warnen, kann alternativ vorgesehen sein, daß das Gitter, wenn es an mindestens einer Stelle des dargestellten Flugraums den Boden berührt, farblich anders gekennzeichnet ist, als wenn es vollständig über dem Boden schwebt.

Zur weiteren Orientierung ist gemäß einer anderen Weiterbildung der Erfindung vorgesehen, daß ferner erdfeste Navigationseinrichtungen in dem dargestellten Flugraum dargestellt sind. Insbesondere können zu überfliegende Festpunkte in Flughöhe rahmenartig dargestellt sein und eine senkrechte Verbindungslinie zum Boden aufweisen. Dadurch wird dem Piloten einerseits das Ansteuern der Festpunkte erleichtert und andererseits der Zeitpunkt des Überfliegens eines Festpunktes angezeigt.

Um eine vorgegebene Flugbahn besser verfolgen oder erreichen zu können, wird gemäß einer anderen Weiterbildung der Erfindung vorgeschlagen, daß ferner ein Rahmen dargestellt wird, welcher eine Soll-Flugbahn an einer Stelle kennzeichnet, welche im wesentlichen um die Länge des dargestellten Teils der vorausberechneten Flugbahn vor dem Flugzeug liegt. Wenn die Spitze der dargestellten vorausberechneten Flugbahn in diesen Rahmen (flight path director) zeigt, wird dem Piloten damit mitgeteilt, daß das Flugzeug bei den gegebenen Steuergrößen die Sollflugbahn erreicht bzw. beibehält - abgesehen von auftretenden Störeinflüssen, deren Korrektur durch entsprechende Steuereingaben erforderlich ist.

Die Nachrichtentechnik bietet Mittel zum Austausch von Daten zwischen mehreren Flugzeugen. Diese an sich bekannten Mittel können bei dem erfindungsgemäßen Verfahren zur Übertragung von Daten über die vorausberechnete Flugbahn eines weiteren Flugzeugs genutzt werden, wobei die vorausberechnete Flugbahn des weiteren Flugzeugs in die Darstellung des Flugraums eingeblendet wird. Dabei kann vorgesehen sein, daß bei einer gefährlichen Annäherung der vorausberechneten Flugbahnen ein Warnsignal und Vorschläge für eine Kursänderung ausgegeben werden.

Diese Weiterbildung stellt eine wesentliche Verbesserung bekannter Anzeigen einer Näherungswarnung (proximity warning) dar, bei denen lediglich die Tatsache, daß eine gefährliche Annäherung möglich ist, und Vorschläge zur Richtung eines Ausweichmanövers angezeigt werden. Bei der Darstellung beider vorausberechneten Flugbahnen und der Anzeige von Kursänderungen wird demgegenüber dem Piloten unmittelbar der gesamte Zusammenhang, also auch die Bedeutung eines Ausweichens in der vorgeschlagenen Richtung mitgeteilt.

Die Orientierung nach dem dargestellten Gitter in größeren Flughöhen kann gemäß einer anderen Weiterbildung auch dadurch verbessert werden, daß oberhalb einer vorgegebenen Flughöhe ein zweites Gitter oberhalb des Bodens dargestellt wird. Um dem Piloten die Kontrolle darüber zu erleichtern, ob eine festgelegte Flugebene eingehalten wird, kann das zweite Gitter eine festgelegte Flugebene darstellen und mit der Höhe der Flugebene gekennzeichnet sein.

Durch die in weiteren abhängigen Ansprüchen aufgeführten Maßnahmen sind weitere vorteilhafte Weiterbildungen und Verbesserungen des Verfahrens bzw. der Einricht möglich.

Insbesondere können in Form von Skalen und alphanumerischen Anzeigen mit dem erfindungsgemäßen Verfahren weitere Information sichtbar gemacht werden. Dabei kann in besonders vorteilhafter Weise unter anderem vorgesehen sein, daß eine waagerecht verlaufende Skala für den Kurs vorgesehen ist mit einer ersten Marke für den jeweils geflogenen Kurs und mit einer zweiten Marke, welche denjenigen Kurs kennzeichnet, der nach einer Standardausleiting, die zum Zeitpunkt der Darstellung der zweiten Marke begonnen wird, vorausberechnet erreicht wird.

Ferner können verschiedene Bildwiedergabeeinrichtungen in vorteilhafter Weise für das erfindungsgemäße Verfahren benutzt werden. Es ist eine Verwendung von zweidimensionalen Bildschirmen möglich - beispielsweise einer Kathodenstrahlröhre, einer LCD- oder einer Plasma-Anordnung.

Auch Mittel zur dreidimensionalen Darstellung können im Rahmen der Erfindung benutzt werden - beispielsweise holographische Verfahren oder stereoskopische Verfahren mit jeweils einer Bildwiedereingabeeinrichtung für ein linkes und ein rechtes Auge. Zu letzterem sind Vorrichtungen zur Befestigung am Kopf des Piloten (helmet mounted) bekannt.

Die Erfindung läßt zahlreiche Ausführungsformen zu. Mehrere davon sind schematisch in der Zeichnung anhand mehrerer Figuren dargestellt und nachfolgend beschrieben. Es zeigt:
Fig. 1 ein Bockschaltbild eines Informations- und Überwachungssystems eines modernen Verkehrsflugzeugs mit einer Einrichtung zur Durchführung des erfindungsgemäßen Verfahrens,
Fig. 2 bis Fig. 8 Schirmbilder von Anzeigen nach dem erfindungsgemäßen Verfahren mit verschiedenen Informationen und verschiedenen Flugsituationen,
Fig. 9 ein Blockschaltbild einer Einrichtung zur Durchführung des erfindungsgemäßen Verfahrens und
Fig. 10 ein Diagram eines Programms für die Einrichtung zur Durchführung des erfindungsgemäßen Verfahrens.

Gleiche Teile sind in den Figuren mit gleichen Bezugszeichen versehen.

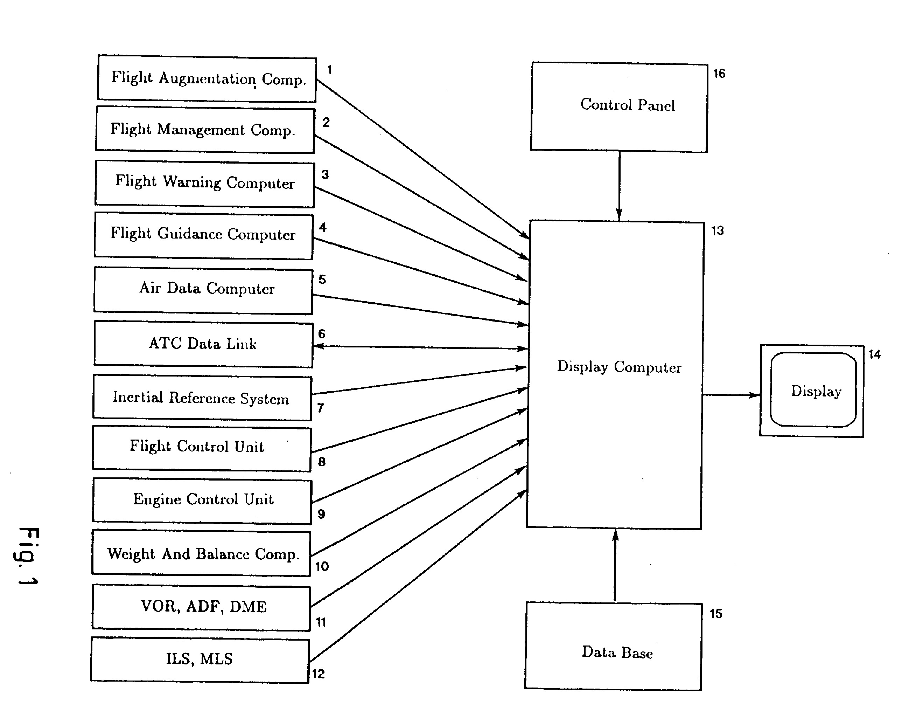

Bei dem Blockschaltbild gemäß Fig. 1 sind die Einheiten 1 bis 12 an sich bekannte Rechen- und Steuergeräte in Verkehrsflugzeugen, die Informationen an die Einrichtung zur Durchführung des erfindungsgemäßen Verfahrens - im folgenden Displaycomputer 13 genannt - weiterleiten.

An den Displaycomputer 13 sind ein Monitor 14, ein Speicher 15 sowie ein Bedienfeld 16 angeschlossen. Aus den von den Einheiten 1 bis 12 dem Displaycomputer 13 zugeführten Informationen werden im Displaycomputer Daten über den Flugverlauf innerhalb von jeweils sechs bis acht Sekunden vorausberechnet. Die Daten werden dann zusammen mit anderen Daten, wie beispielsweise Daten über geographische Verhältnisse, zu Symbolen verarbeitet, die wiederum in Videosignale umgewandelt und dem Monitor 14 zugeführt werden. Wie die bekannten Einheiten 1 bis 12 sind auch der Displaycomputer 13, der Monitor 14, der Speicher 15 und das Bedienfeld 16 aus Sicherheitsgründen mehrfach vorhanden.

Je nach Umständen im einzelnen können von den Einheiten 1 bis 12 folgende Informationen dem Displaycomputer 13 zugeführt werden:
- Flight augmentation computer 1: Grenzgeschwindigkeiten
- Flight management computer 2: Navigationsvorgaben, Kurse
- Flight warning computer 3: Daten, die zur Sicherheits überwachung erforderlich sind, wie beispielsweise Winkellage und deren Grenzwerte
- Flight guidance computer 4: Navigationsvorgaben
- Air data computer 5: Staudruck, aktueller Luftdruck
- ATC data link 6: Informationen von Flugkontrollstellen und anderen Flugzeugen
- Inertial reference system 7: Position, Kurs, Beschleunigungen
- Flight control unit 8: Autopilot-Funktionen
- Engine control unit 9: Drehzahl, Leistung der Triebwerke
- Weight and balance computer 10: Gewicht und Trimmung des Flugzeugs
- VOR, ADF, DME 11: Richtung und Entfernung zu Funkfeuern
- ILS, MLS 12: Daten von Instrumentenlandesystemen

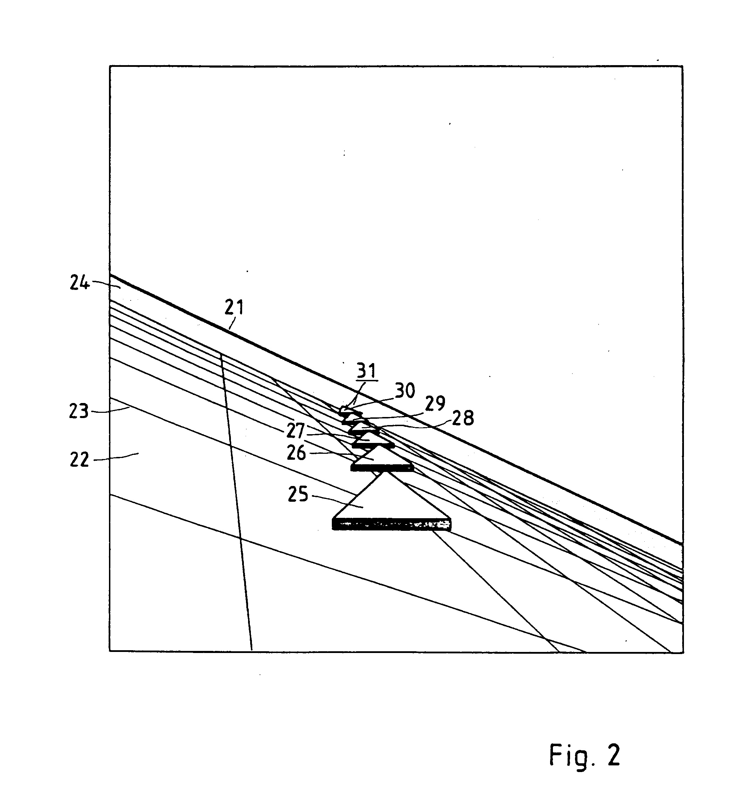

Der Monitor 14 ist vorzugsweise ein Farbmonitor. In den Figuren 2 bis 10 sind jedoch die Schirmbilder entsprechend den patentamtlichen Vorschriften als einfarbige Zeichnungen wiedergegeben.

Fig. 2 zeigt ein Schirmbild, während das Flugzeug eine Linkskurve fliegt. Dementsprechend weist der Horizont 21 eine Schräglage auf. Der Boden (Erdoberfläche) ist in dem dargestellten Beispiel eben und von einem Gitter 23 überzogen, das in Nord-Süd-richtung, beispielsweise an den magnetischen Polen, ausgerichtet ist. Der Abstand der Gitterlinien ist vorgegeben und kann bei einer bevorzugten Ausführungsform der Erfindung zwischen einer nautischen Meile und einer geodätischen Winkelminute umgeschaltet werden.

Da bei der perspektivischen Darstellung im Bereich des Horizonts die Zahl der Gitterlinien sehr groß wird, wäre es ohne weitere Maßnahmen erforderlich, sehr viele Gitterlinien zu berechnen, die aus Gründen der Auflösung ohnehin nicht mehr dargestellt werden können. Bei einer Weiterbildung der Erfindung ist deshalb vorgesehen, in einem Flächenbereich 24 vor dem Horizont keine Linien mehr zu berechnen und darzustellen, sondern den Flächenbereich 24 mit einer Farbe zu versehen, welche an den sich aus der Farbe des Bodens und aus den enger werdenden Linien des Rasters ergebenden Farbeindruck angepaßt ist.

Bei den dargestellten Ausführungsbeispielen wird die vorausberechnete Flugbahn durch dreieckförmige Scheiben 25 bis 30 dargestellt. Dabei stellen die einzelnen Scheiben 25 bis 30 jeweils die vorausberechnete Position, die Höhe, den Kurs und die Lage des Flugzeugs dar. Die Summe der scheibenförmigen Symbole 25 bis 30, also der gesamte dargestellte Teil der vorausberechneten Flugbahn, wird im folgenden Prädiktor 31 genannt.

Zusätzlich zu den genannten Informationen erhält der Pilot einen Eindruck über die Geschwindigkeit dadurch, daß die Ausdehnung der einzelnen Symbole 25 bis 30 in Flugrichtung und damit die gesamte Länge des Prädiktors von der Geschwindigkeit abhängt. Eine weitere Geschwindigkeitsinformation wird durch die Farbe derart vermittelt, daß in einem unkritischen Geschwindigkeitsbereich die Oberflächen der Symbole eine erste Farbe, beispielweise Grün, aufweisen, während bei Annäherung an unzulässig hohe oder unzulässig niedrige Geschwindigkeiten die Farbe derjenigen Symbole, für welche derartige Geschwindigkeiten vorausberechnet werden, eine entsprechende Warnfarbe, beispielsweise Rot und Orange, annehmen.

Da es für den Piloten letztlich interessant ist, wohin das Flugzeug fliegt, ist der Prädiktor 31 insgesamt nach dem vorausberechneten Kurs über Grund ausgerichtet. Da jedoch auch der Steuerkurs eine wichtige Information für den Piloten darstellt - insbesondere beim Landen mit Seitenwind -, ist das erste Symbol 25 des Prädiktors 31 nach dem Steuerkurs ausgerichtet.

Dadurch, daß die Symbole 25 bis 30 nicht als Flächen sondern als Scheiben mit einer vorgegebenen Dicke dargestellt sind, ergibt sich eine wesentliche Verbesserung des räumlichen Eindrucks. Bei einem realisierten Ausführungsbeispiel sind die sichtbaren Kanten, die in den Figuren Schwarz wiedergegeben sind, in Dunkelgrün gehalten.

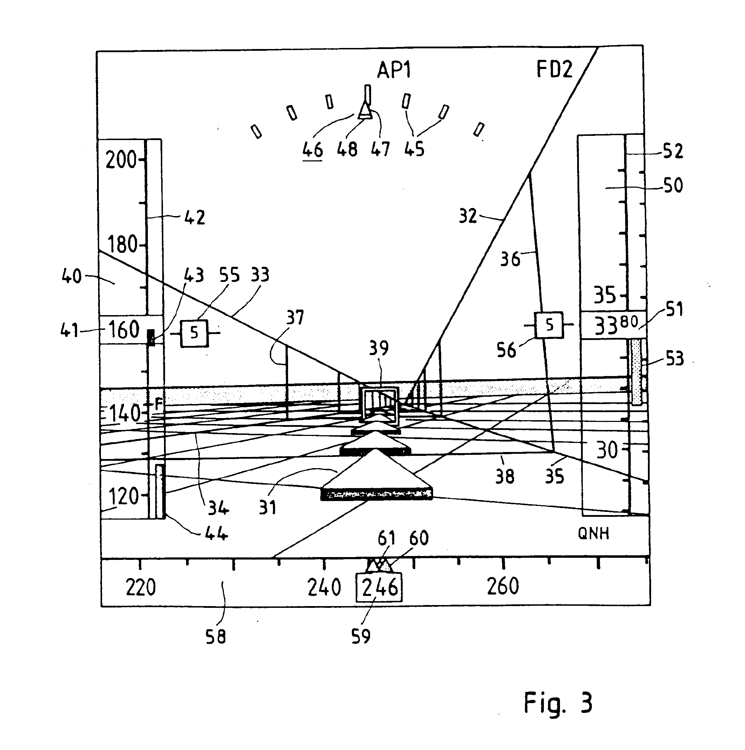

Fig. 3 zeigt ein weiteres Schirmbild, bei dem gegenüber Fig. 2 eine andere Flugsituation dargestellt ist und ferner weitere Informationen auf dem Schirmbild in Form von Skalen, Zeigern und alphanumerischen Anzeigen wiedergegeben werden. Die dargestellte Flugsituation entspricht einem Landeanflug, wobei sich das Flugzeug in einem Anflugkanal befindet, dessen Grenzen durch entsprechende Geraden dargestellt sind, von denen lediglich die Geraden 32 bis 38 mit Bezugszeichen versehen sind. Zur Darstellung des Anflugkanals 32 bis 38 erhält der Displaycomputer 13 (Fig. 1) aus dem Speicher 15 und der Einheit 12 für den jeweils anzufliegenden Flughafen die entsprechenden Daten.

Das Schirmbild gemäß Fig. 3 zeigt ferner einen Rahmen 39, der im folgenden als Flight path director bezeichnet wird und auf einer vorgegebenen Flugbahn in einer Entfernung vor dem Flugzeug erzeugt wird, in welcher die Spitze des Prädiktors 31 liegt. Der Pilot kann somit seine Steuereingaben derart ausführen, daß die Spitze des Prädiktors 31 innerhalb des Flight path directors 39 liegt. Der Flight path director 39 "fliegt" somit vor dem Flugzeug auf der vorgegebenen Flugbahn her.

Im folgenden werden die auf dem Schirmbild gemäß Fig. 3 sichtbaren weiteren Anzeigen erläutert. Für die Geschwindigkeit ist ein Bereich 40 am linken Rand des Bildschirms vorgesehen. Dabei wird die Geschwindigkeit im feld 41 in Knoten numerisch angezeigt. Eine senkrecht verlaufende Skala 42 wird in Abhängigkeit von der Geschwindigkeit derart verschoben, daß die numerische Anzeige über der entsprechenden Stelle der Skala gezeigt wird. Ein Balken 43 dient als Anzeige der Geschwindigkeitstendenz, die im Falle des Schirmbildes nach Fig. 3 leicht negativ ist. Außerdem ist neben der Skala 42 ein F in das Bild eingeblendet, um anzuzeigen, daß bei dieser Geschwindigkeit die Landeklappen auszufahren sind.

Ein weiterer Balken 44 geht vom unteren ende des Bereichs 40 aus und kennzeichnet die untere kritische Grenzgeschwindigkeit, die bei der jeweiligen Flugsituation zu meiden ist. Entsprechend ist der Balken 44 mit einer auffälligen Farbe, beispielsweise Rot, versehen.

Die im oberen Teil des Bildschirms eingeblendeten Marken 45 stellen zusammen mit einem Zeiger 46 eine Rollwinkelanzeige dar. Dabei zeigt ein oberer Teil 47 des Zeigers 46 den Rollwinkel an, während ein unterer Teil 48 als Slip skid indicator dient. Über dem Rollwinkelanzeiger ist eine Zeile mit alphanumerischen Zeichen vorgesehen, welche Informationen über den Autopiloten umfassen. Bei der in Fig. 3 dargestellten Flugsituation ist beispielsweise der Autopilot AP1 eingeschaltet. Ferner wird mit dem Flight director FD2 gearbeitet.

In einem Bereich 50 am rechten Rand des Schirmbildes werden Informationen zur Flughöhe dargestellt. Dabei wird in einem mittleren Feld 51 die jeweilige Flughöhe in Fuß numerisch angezeigt. Eine Skala 52 verläuft senkrecht scheinbar hinter dem Feld 51 und bewegt sich in Abhängigkeit von der Flughöhe derart, daß die numerische Anzeige vor der entsprechenden Stelle der Skala erscheint. Die Länge eines vom Feld 51 ausgehenden Balkens 53 stellt die Variometeranzeige dar. Im Falle von Fig. 3 wird ein Sinken des Flugzeugs angezeigt. Unterhalb des Bereichs 50 bedeutet die Buchstabenkombination QNH den eingestellten Modus für den Höhenmesser.

Zur Anzeige des Nickwinkels sind zwei Marken 55, 56 vorgesehen, welche einerseits durch ihre Lage gegenüber dem Horizont und andererseits numerisch den Nickwinkel angeben.

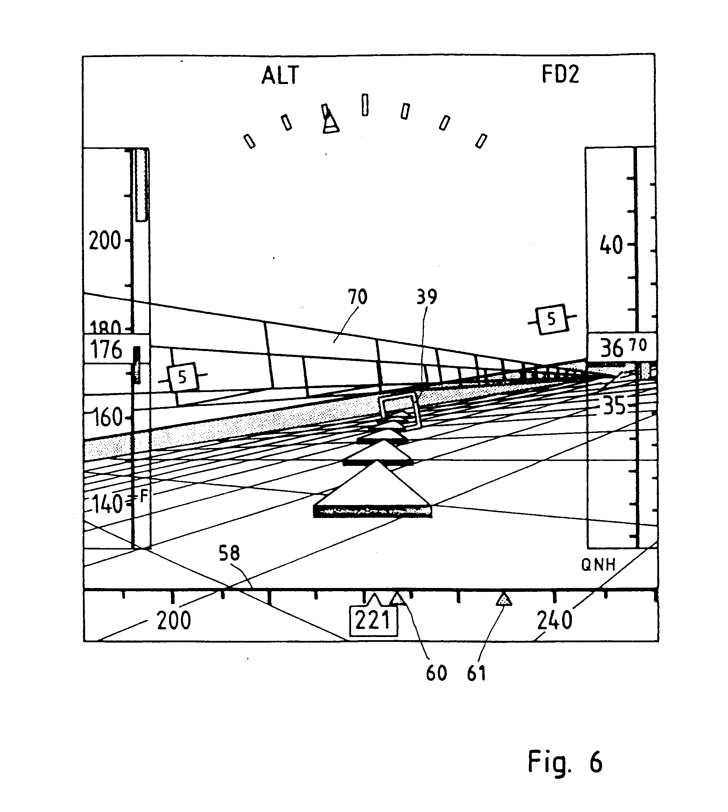

Im unteren Bereich des Schirmbildes ist eine waagerecht verlaufende Skala 58 zur Kursanzeige vorgesehen. Wie bei der Höhen- und Geschwindigkeitsanzeige befindet sich auch bei dieser Skala ein feststehendes Feld 59, in welchem der Steuerkurs (Heading) numerisch angezeigt wird. Dazu wird die Skala 58 passend in waagerechter Richtung Bewegt. Weitere Marken 60, 61 werden später anhand von Fig. 6 genauer erläutert.

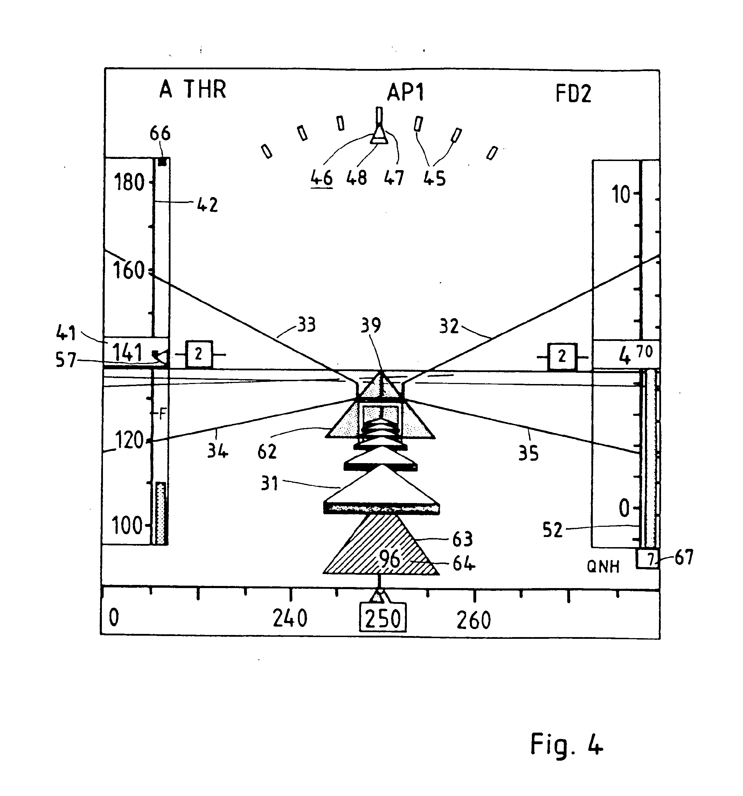

Das Schirmbild gemäß Fig. 4 zeigt eine gegenüber Fig. 3 spätere Phase des Landeanflugs. Dabei sind die Landebahn 62, der letzte Teil des Anflugkanals 32 bis 35 sowie der Flight path director 39 erkennbar. Gerät das Flugzeug unter eine vorgegebene Höhe, so wird auf dem Schirmbild ein Schatten 63 des Prädiktors 31 sichtbar. Der Schatten 63 gibt dem Piloten eine Information über die Höhe bzw. die vorausberechnete Höhe, ohne daß es einer Konzentration auf ein weiteres Instrument bedarf. Im Zusammenhang mit der Farbänderung der Symbole des Prädiktors 31 im Bereich der unteren zulässigen Geschwingidkeit gewinnt der Pilot auf einen Blick alle kurz vor dem Aufsetzen benötigten Informationen.

Gegenüber den weiteren in das Schirmbild eingeblendeten Informationen sind in Fig. 4 aufgrund der anderen Flugsituation weitere Informationen erkennbar. So ist im Feld 41 für die Geschwindigkeitsanzeige ein Dreieck 57 sichtbar, das die Sollgeschwindigkeit bei eingeschaltetem Autopiloten darstellt. Am oberen Ende der Skala 42 ist ein weiterer Balken 66 sichtbar, der die sich aus der jeweiligen Flugsituation ergebende obere zulässige Geschwindigkeit darstellt. Außerdem ist am unteren Ende der Skala 52 ein Feld 67 vorgesehen, in welchem numerisch die Sinkgeschwindigkeit dargestellt wird, wenn sie einen bestimmten Wert überschreitet.

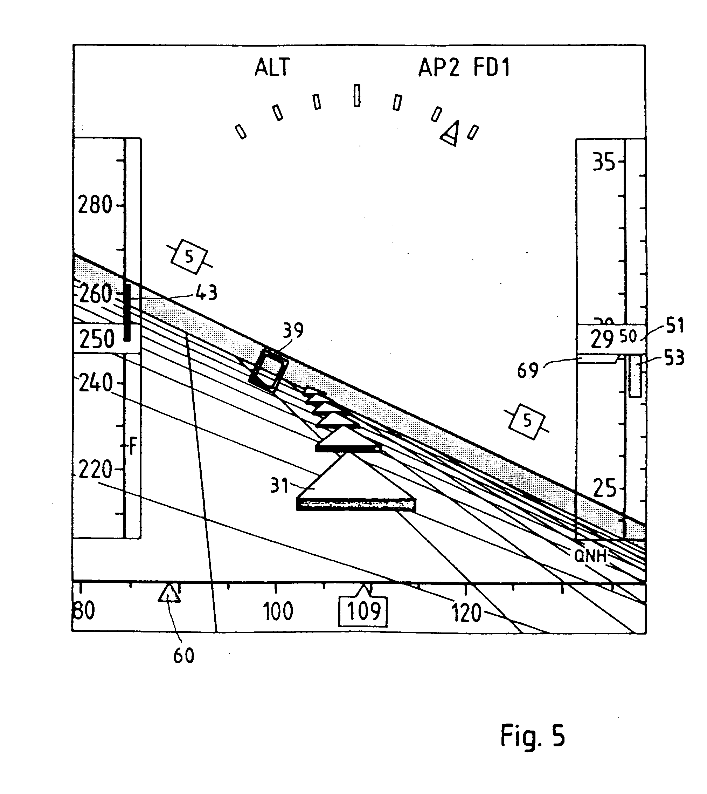

Fig. 5 zeigt wiederum am Beispiel einer Linkskurve den Flight path director 39. Aus der Darstellung wird deutlich, daß das Flugzeug auf der vorausberechneten Flugbahn an dem Flight path director vorbeifliegt, wenn der Pilot nicht die Kurve enger zieht. Ferner zeigen der Balken 43 eine Beschleunigung und der Balken 53 ein Sinken an.

Bei dem Schirmbild gemäß Fig. 5 ist der derzeitige Steuerkurs 109°. Eine Marke 60 weist auf etwa 89°. Dieser Kurs ist derjenige Kurs, welchen das Flugzeug fliegt, wenn zum dargestellten Zeitpunkt ein Standard-Ausleitmanöver begonnen wird. Unter dem Feld 51 ragt teilweise ein weiteres Feld 69 hervor, mit welchem die dem Autopiloten vorgegebene Sollflughöhe wiedergegeben wird. Bei exaktem Einhalten der Sollflughöhe verschwindet die Marke 69 hinter dem Feld 51.

Bei der in Fig. 6 dargestellten Flugsituation soll durch Fliegen einer Rechtskurve auf einer vorgeschriebenen Flugbahn der dargestellte Anflugkanal 70 erreicht werden. Dazu wird mit Hilfe der erfindungsgemäßen Einrichtung ein Flight path director 39 erzeugt. Der Pilot kann vorausschauend die Wirkung seiner Steuereingaben bezüglich des Flight path directors 39 beobachten und somit die vorgeschriebene Kurve in sehr guter Annäherung und mit einem Minimum an Korrektureingaben fliegen. Außer der Marke 60 ist auf dem Schirmbild nach Fig. 6 eine weitere Marke 61 sichtbar, die auf einen Punkt der Skala 58 weist. Mit dieser Marke kann ein ausgewählter Kurs (Selected heading) angezeigt werden, der zuvor eingegeben wurde.

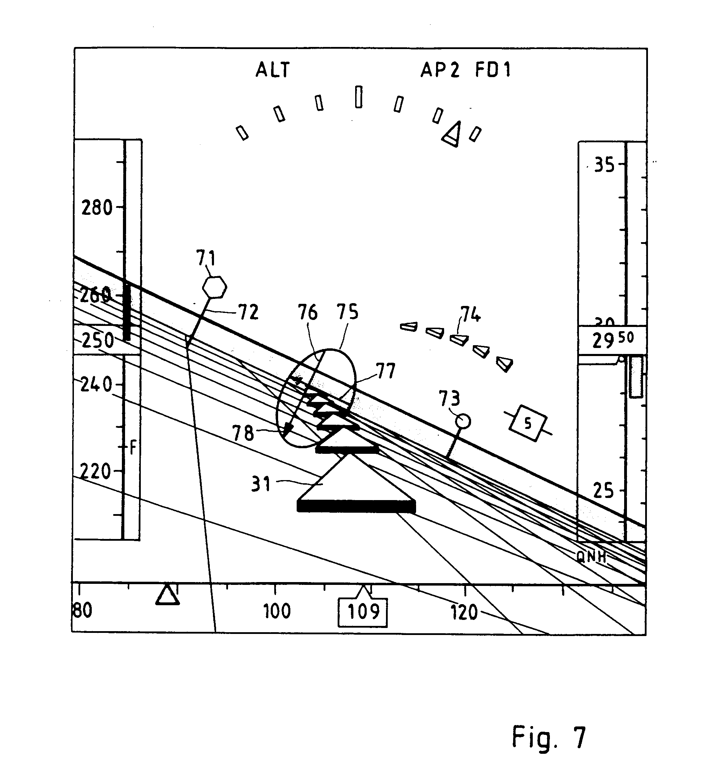

Das Schirmbild nach Fig. 7 zeigt außer den bereits erläuterten Darstellungen bodenfeste Navigationshilfen, die als Rahmen 71, 73 dargestellt sind, die über je eine Stange 72 mit dem Boden verbunden sind. Durch diese Verbindung kann der Pilot gut den Standort der Navigationshilfe abschätzen. Ferner sind die Navigationshilfen durch verschiedenartige Rahmen 71, 73 dargestellt. So kann beispielsweise ein sechseckiger Rahmen ein VOR und ein runder Rahmen ein NDB kennzeichnen. Durch die Steuerung des Flugzeugs nach dem Prädiktor 31 kann der Pilot einerseits sehr genau die Navigationshilfe überfliegen. Andererseits ist für den Piloten der Zeitpunkt des Überfliegens leicht erkennbar und ist etwa eine Sekunde, nachdem das zeitlich letzte Symbol 15 durch den Rahmen 71 hindurchtritt.

Ferner ist bei dem Schirmbild nach Fig. 7 außer dem Prädiktor 31, der die vorausberechnete Flugbahn des eigenen Flugzeugs darstellt, ein weiterer Prädiktor 74 sichtbar, der aus Informationen über die vorausberechnete Flugbahn eines weiteren Flugzeugs gewonnen wird. Nähern sich die vorausberechneten Flugbahnen zu mindestens einem Zeitpunkt mehr als zulässig, so wird dieses dem Piloten durch Verfärbung und/oder Blinken der jeweiligen Symbole deutlich gemacht. Dabei kann es nützlich sein, wenn sich der Pilot ein Bild über die in bezug auf die momentane Flugsituation möglichen Flugbahnen (Potential flight paths) machen kann.

Es ist deshalb gemäß einer Weiterbildung der Erfindung vorgesehen, daß die Grenzen desjenigen Raums, den das Flugzeug erreichen kann, errechnet und räumlich dargestellt werden. Ein Beispiel dafür ist ebenfalls in Fig 7 gezeigt, wobei die Grenzen des vom Flugzeug erreichbaren Raums als Ellipse 75 dargestellt sind, die die dargestellte vorausberechnete Flugbahn umfaßt. Als weitere Information sind eine horizontale und eine vertikale Strecke 76, 77 vorgesehen, die sich in der Flugbahn kreuzen. Ein Pfeil 78 zeigt dem Piloten einen Vorschlag zum Ausweichen an.

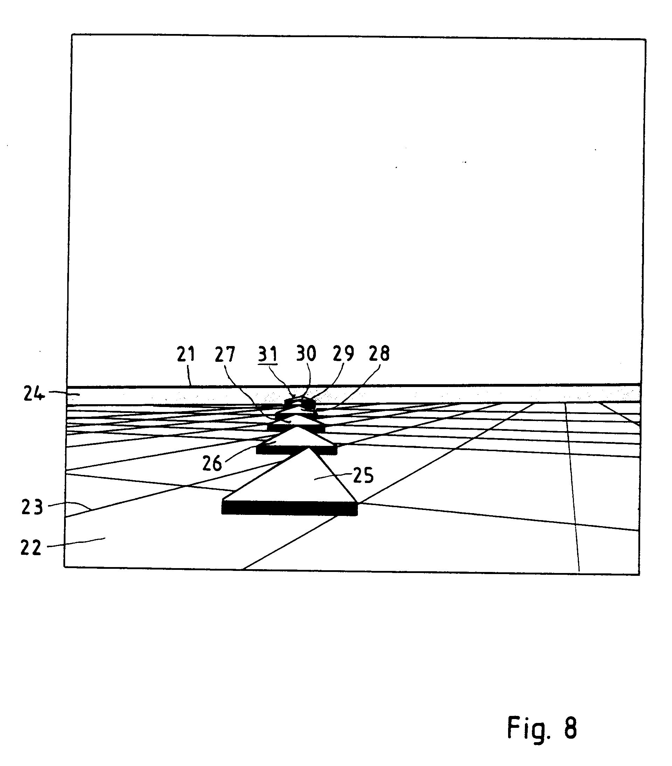

Fig. 8 zeigt ein Schirmbild mit einem Prädiktor 31, dessen erstes Symbol 25 entsprechend dem Steuerkurs ausgerichtet ist. Die weiteren Symbole 26 bis 30 sind nach dem Kurs über Grund ausgerichtet.

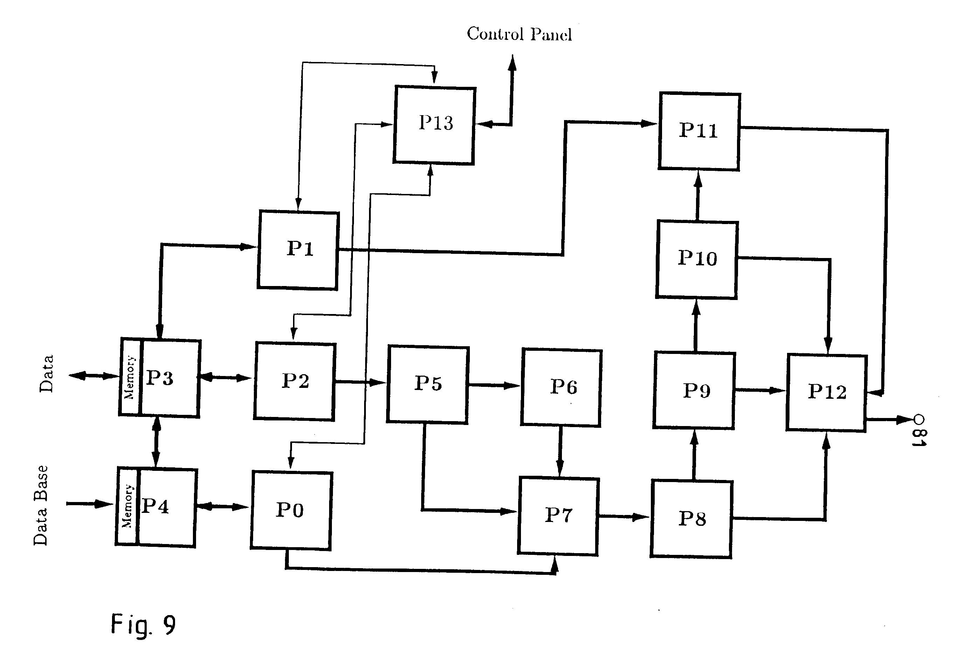

Fig. 9 zeigt als Blockschaltbild ein Ausführungsbeispiel für den Displaycomputer 13 (Fig. 1), der im wesentlichen aus 14 sogenannten Transputern P0 bis P13 aufgebaut ist. Geeignet sind beispielsweise Transputer des Types INMOS T 800 und des Typs INMOS T 212 der Firma INMOS Ltd. Transputer sind Prozessoren, die sich durch eine einfache buslose Kommunikation untereinader auszeichnen. Je nach Anwendung kann ein dem Bedarf an Rechenkapazität angepaßtes Mehr-Prozessor-Netzwerk konfiguriert und zur parallelen Datenübertragung und -verarbeitung genutzt werden.

Auf den Prozessoren des Netzwerks werden Programmmodule plaziert, die über Link interfaces untereinander kommunizieren. Eine für Transputer entwickelte Hochsprache OCCAM - beschrieben beispielsweise in R. Steinmetz: OCCAM2, 2. Auflage, Hüthig-Verlag, Heidelberg 1988 - unterstützt das buslose Netzwerkkonzept durch Sprachkonstrukte, mit deren Hilfe sogenannte Software-Kanäle vereinbart werden können, über die Daten in einfacher Art und Weise an andere Prozessoren übertragen werden. Ein Software-Kanal verbindet zwei im allgemeinen parallele Prozessoren. Hinweise zur Programmierung von Transputern finden sich ferner in zahlreichen Veröffentlichungen der Firma INMOS, Ltd.

Die von den Einheiten 1 bis 12 (Fig. 1) zugeführten Daten werden zunächst in einem dem Prozessor P3 zugeordneten Speicher zwischengespeichert. Der Prozessor P3 übernimmt die Zeitsteuerung um eine Datenkonsistenz zwischen den angeschlossenen Einheiten und dem Displaycomputer zu gewährleisten. Ferner werden mit Hilfe des Prozessors P3 Datenkonvertierungen und eine logische Verteilung der Größen zur Weiterverabeitung auf die Prozessoren P0, P1, P2 vorgenommen. Ein dem Prozessor P4 zugeordneter Speicher dient zur Übernahme von Daten aus dem Speicher 15 (Data base, Fig. 1). Der Prozessor P13 steuert den Datenfluß vom und zum Bedienfeld 16 (Control panel, Fig. 1).

In einem Symbolgenerator, der von den Prozessoren P0, P2, P5, P6 und P7 gebildet wird, wird zunächst ein Szenenmodell erstellt, was im einzelnen anhand von Fig. 9 später erläutert wird. Die Prozessoren P8 bis P11 übernehmen die Aufgabe einer Raster-Scan-Konvertierung der dreidimensionalen Symbolikelemente. Der Prozessor P12 liest die in den Prozessoren P8 bis P11 erzeugten vier gleich großen Bildbereiche in den Bildspeicherbereich ein. Am Ausgang 81 des Displaycomputers sind die Videosignale entnehmbar.

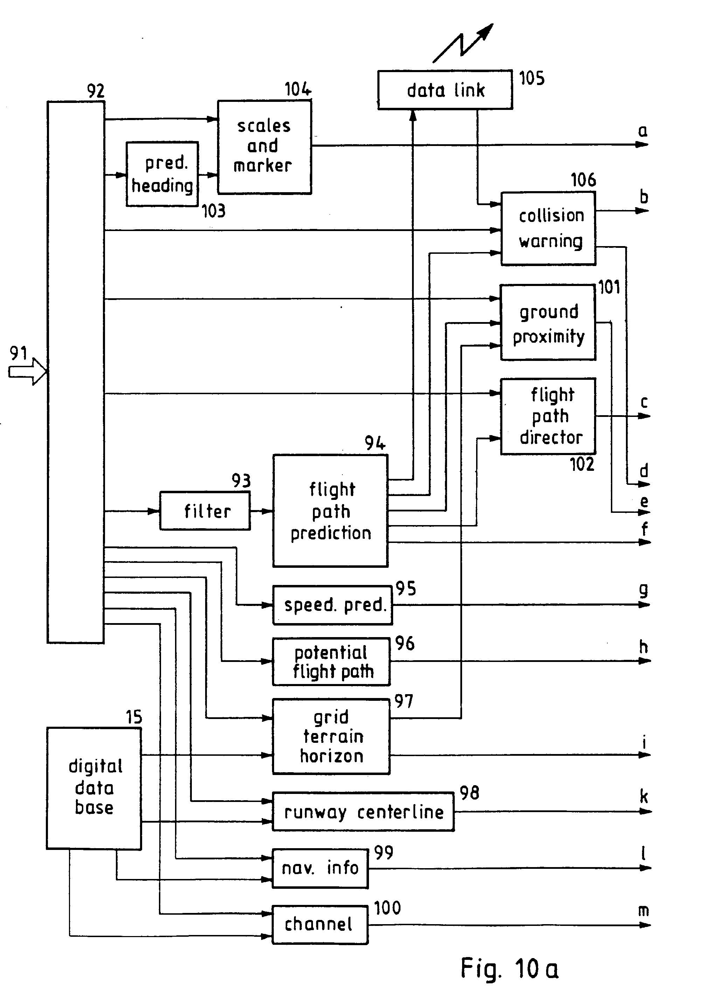

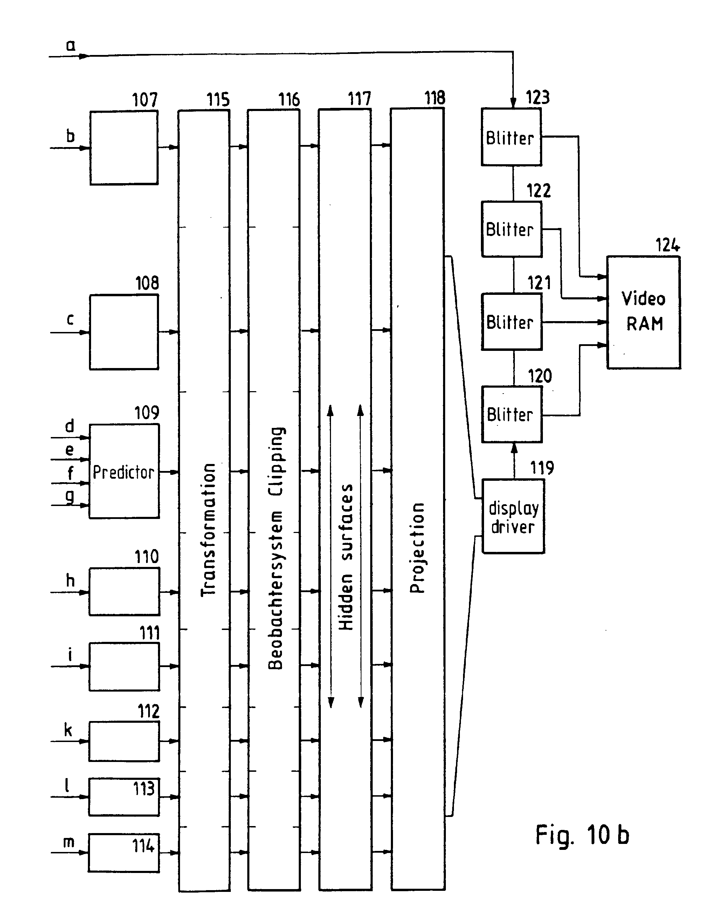

Das in Fig. 10a und b dargestellte Diagramm zeigt im wesentlichen den Datenfluß und die wichtigsten Schritte zur Datenverarbeitung. Dabei sind zusammengehörende Linien gleichlautend von a bis m bezeichnet. Bei 91 werden die Daten von den Einheiten 1 bis 12 (Fig. 1) zugeführt und bei 92 in geeigneter Weise zwischengespeicht, konvertiert und auf verschiedene Prozessoren verteilt. Daten, welche zur Vorausberechnung der Flugbahn erforderlich sind, werden zunächst bei 93 gefiltert und dann der Berechnung der vorausberechneten Flugbahn 94 zugeführt. Die Filterung hat im wesentlichen eine Tiefpaßcharakteristik und dient zur Unterdrüchung von Störungen, welche zu einer Vorausberecknung der Flugbahn nicht sinnvoll beitragen. In einem Programmteil 45 wird parallel dazu die Geschwindigkeit vorausberechnet, während ein Programmteil 96 zur Berechnung der erreichbaren Flugbahnen dient.

Aus dem Speicher 15 werden die Informationen zu dem jeweils zu überfliegenden Gebiet ausgelesen und dienen zusammen mit Fluginformationen, beispielsweise des Kurses und der Höhe, zur Berechnung des Gitters, des Horizonts und sonstiger Merkmale des Bodens im Programmteil 97. Bei 98 wird die Mittellinie der Landebahn ebenfalls mit Hilfe aus dem Speicher 15 ausgelesenen Daten und mit Hilfe von Fluginformationen berechnet. Bei 99 werden Informationen über Navigationshilfen aus dem Speicher 15 ausgelesen und mit Fluginformationen verknüpft. Schließlich erfolgt im Programmteil 100 in ähnlicher Weise die Berechnung des Anflugkanals.

Unter Verwendung der in den Programmteilen 94 bis 100 berechneten Daten und verschiedener Fluginformationen werden bei 101 und 102 Daten für eine Bodenannäherungswarnung und für einen Flight path director generiert. Bei 103 wird aus den aktuellen Flugdaten ein Kurs vorausberechnet, der bei Ausleitung einer Kurve nach Abbauen des aktuellen Rollwinkels mit einer Standard-Rollrate (Standard-Ausleitung) erreicht wird. Dieser Kurs sowie weitere Flugdaten werden einem Programmteil 104 zur Berechnung der Skalen und numerischen Anzeige zugeleitet.

Die vorausberechneten Flugbahndaten werden vom Programmteil 94 einer Einrichtung 105 zur Datenübertragung zugeführt, damit die vorausberechnete Flugbahn auch in anderen Flugzeugen oder in Flugsicherungsstationen angezeigt werden kann. Außerdem können mit Hilfe der Einrichtung 105 Daten von einem in der Nähe befindlichen Flugzeug empfangen und im Programmteil 106 mit den Daten der eigenen vorausberechneten Flugbahn und den eigenen Flugdaten zu einer Kollisionswarnung verarbeitet werden. Ein von den Programmteilen 107 bis 114 gebildeter Symbolgenerator erstellt ein Szenenmodell, welches Elemente wie beispielsweise den Prädiktor 31, den Sollwegkanal 70, die Landebahn 62, das Bodenraster 23 und den Horizont 21 umfaßt. Diese Elemente werden als dreidimensionale Kanten- bzw. Flächenmodelle in Weltkoordinaten formuliert und im anschließenden Programmteil 115 unter Verwendung der aktuellen Lage- und Positionsdaten in ein gemeinsames Bezugssystem transformiert.

Im einzelnen wird bei 109 der Prädiktor generiert, wozu Daten über die vorausberechnete Flugbahn von 94 zugeführt werden, die im wesentlichen die Form des Prädiktors bestimmen, während die von 95 zugeführten Daten über die vorausberechnete Geschwindigkeit die Länge des Prädiktors und die Farbgebung beeinflussen. Die Farbgebung wird ebenfalls von Daten beeinflußt, die von der Kollisionswarnung 106 zugeführt werden, wobei gegebenenfalls in einem nicht dargestellten Programmteil ein Symbol als Vorschlag für ein Ausweichmanöver generiert wird. Schließlich dienen die vom Programmteil 101 zugeführten Daten zusammen mit den bereits aufgeführten zur Erzeugung des Schattens des Prädiktors. Die übrigen Programmteile 108 und 110 bis 114 berechnen jeweils die Symbole Flight path director 39 (Fig. 3), Potential flight path 76 (Fig. 7), Gitter 23, Horizont 21 und gegebenenfalls andere Bodenmerkmale, Landebahnmittellinie, Navigationshilfe 71 (Fig. 7) und Anflugkanal 70 (Fig. 6).

Nach der Transformation der Symbole in ein gemeinsames Bezugssystem bei 115 wird das transformierte Szenenmodell in das dreidimensionale Beobachtersystem mit dem Design-eye-point als Ursprung überführt. Im Anschluß daran werden die vom Beobacter aus sichtbaren Anteile der Symbolikelemente bestimmt. Hierzu werden im Programmteil 116 sogenannte Clipping-Algorithmen verwendet, die nichtsichtbare Polygon- und Liniensegmente unterdrücken. Danach werden im Programmteil 117 bei den auf das Sichtvolumen begrenzten Objekte für den Beobachter nichtsichtbare Kanten und Flächen unterdrückt. Während die Transformation und die Überführung in ein dreidimensionales Beobachtersystem für die einzelnen symbole getrennt erfolgen, ist bei dem Unterdrücken der nichtsichtbaren Kanten und Flächen das Verhältnis der Symbole untereinander zu berücksichtigen, was bei der Darstellung des Programmteils 117 durch senkrechte Pfeile angedeutet ist.

Im Programmteil 118 erfolgt eine Projektion der Symbole auf die Schirmbildebene. Im Anschluß daran wird über einen Displaydriver 119 der Datenstrom zu den Einrichtungen zur Umwandlung der Daten in ein Videosignal, Blitter 120 bis 123 geführt. Der Blitter 123 erhält zusätzlich die vom Programmteil 104 erzeugten Daten über Skalen, Zeiger und alphanumerische Zeichen. Da diese Daten zweidimensional dargestellt werden, werden hierfür die Bearbeitungsschritte 107 bis 119 nicht benötigt. Die von den Blittern 120 bis 123 erzeugten Signale werden in einem Videospeicher 124 zusammengefaßt und können anschließend dem Monitor 14 (Fig. 1) zugeleitet werden.

## Patentansprüche

1. Verfahren zur Darstellung von Flugführungsinformation eines Flugzeugs, wobei mit Hilfe einer
Bildwiedergabeeinrichtung eine räumliche Darstellung des Flugraums mit mindestens einem Horizont erfolgt, dadurch gekennzeichnet, daß die räumliche Darstellung ferner die vorausberechnete Flugbahn des Flugzeugs mit vorausberechneten Positionen und vorausberechneten Lagen des Flugzeugs zu verschiedenen Zeitpunkten umfaßt.

2. Verfahren nach Anspruch 1, dadurch gekennzeichnet, daß die Darstellung der vorausberechneten Flugbahn für eine Strecke erfolgt, die das Flugzeug in einer vorgegebenen Zeit, vorzugsweise in einigen Sekunden, zurücklegt.

3. Verfahren nach Anspruch 2, dadurch gekennzeichnet, daß die Darstellung der vorausberechneten Flugbahn aus einer Reihe von Symbolen besteht, welche innerhalb des dargestellten Flugraums die vorausberechnete Position und die vorausberechnete Lage des Flugzeugs in bezug auf den Flugraum zu verschiedenen Zeitpunkten einnehmen.

4. Verfahren nach Anspruch 3, dadurch gekennzeichnet, daß ein erstes Symbol bezüglich Höhe und Lage nach der vorausberechneten Flugbahn berechnet wird, daß die Ausrichtung des ersten Symbols nach dem tatsächlichen Steuerkurs erfolgt und daß weitere Symbole nach dem vorausberechneten Kurs über Grund ausgerichtet werden.

5. Verfahren nach Anspruch 4, dadurch gekennzeichnet, daß jeweils ein Symbol von einer dreieckigen Scheibe endlicher Dicke gebildet wird, die in der vorausberechneten Bahn des ausgefahrenen Fahrwerks liegt, wobei eine Spitze in die vorausberechnete Flugrichtung weist.

6. Verfahren nach Anspruch 3, dadurch gekennzeichnet, daß die Symbole mit einer von der für das jeweilige Symbol vorausberechneten Geschwindigkeit abhängigen Farbe versehen sind.

7. Verfahren nach Anspruch 6, dadurch gekennzeichnet, daß in einem normalen Geschwindigkeitsbereich die Symbole eine erste Farbe, im Bereich der unteren Grenzgeschwindigkeit eine zweite und im Bereich der oberen Grenzgeschwindigkeit eine dritte Farbe aufweisen.

8. Verfahren nach Anspruch 6, dadurch gekennzeichnet, daß die Vorausberechnung der Geschwindigkeit aus der gemessenen Eigengeschwindigkeit erfolgt.

9. Verfahren nach Anspruch 1, dadurch gekennzeichnet, daß durch Blinken und/oder einen Farbumschlag mindestens eines Teils der dargestellten vorausberechneten Flugbahn eine Windscherungswarnung erfolgt.

10. Verfahren nach Anspruch 3, dadurch gekennzeichnet, daß die Darstellung des Flugraums eine Darstellung des Bodens umfaßt und daß auf dem Boden der von einer gedachten senkrecht über den Symbolen befindlichen Lichtquelle geworfene Schatten der Symbole dargestellt wird.

11. Verfahren nach Anspruch 10, dadurch gekennzeichnet, daß bei Zusammenfallen der Spitze der vorausberechneten Flugbahn und des Schattens ein Warnsignal erzeugt wird.

12. Verfahren nach Anspruch 11, dadurch gekennzeichnet, daß das Warnsignal mindestens ein Blinken und/oder einen Farbumschlag der dargestellten vorausberechneten Flugbahn im Bereich der Spitze umfaßt.

13. Verfahren nach Anspruch 1, dadurch gekennzeichnet, daß die vorausberechnete Flugbahn aus den Istdaten (Geschwindigkeit, Kurs, Höhe, Steigrate, Lagewinkel) und den auf das Flugzeug einwirkenden Beschleunigungen errechnet wird.

14. Verfahren nach Anspruch 1, dadurch gekennzeichnet, daß die vorausberechnete Flugbahn aufgrund eines mathematischen Modells, den Istdaten und den Steuereingaben (Ruderstellungen, Triebwerkleistung) errechnet wird.

15. Verfahren nach Anspruch 14, dadurch gekennzeichnet, daß das mathematische Modell durch Messung der Steuergrößen und des Verhaltens des Flugzeugs während des Fluges verbessert wird.

16. Verfahren nach Anspruch 1, dadurch gekennzeichnet, daß die vorausberechnete Flugbahn nach der Methode der neuronalen Netze errechnet wird.

17. Verfahren nach Anspruch 1, dadurch gekennzeichnet, daß eine Darstellung des Bodens vorgesehen ist.

18. Verfahren nach Anspruch 17, dadurch gekennzeichnet, daß die räumliche Darstellung des Flugraums ein erdfestes Bodengitter umfaßt, das geographisch oder magnetisch ausgerichtet ist, und daß die das Gitter bildenden Linien, bezogen auf den Flugraum, einen konstanten Abstand, vorzugsweise eine nautische Meile oder eine geodätische Winkelminute, aufweisen.

19. Verfahren nach Anspruch 17, dadurch gekennzeichnet, daß die Darstellung des Flugraums eine Darstellung der jeweils vorhandenen Landebahn(en) umfaßt.

20. Verfahren nach Anspruch 19, dadurch gekennzeichnet, daß ferner die Mittellinie der Landebahn in Anflugrichtung verlängert dargestellt ist.

21. Verfahren nach Anspruch 17, dadurch gekennzeichnet, daß die räumliche Darstellung des Flugraums eine Darstellung eines Sollweg-Kanals für einen Landeanflug umfaßt.

22. Verfahren nach Anspruch 17, dadurch gekennzeichnet, daß weitere Bodenmerkmale (Gebirge, Gebäude, Rollbahnen, Verkehrswege) in die räumliche Darstellung des Flugraums einbezogen sind.

23. Verfahren nach Anspruch 18, dadurch gekennzeichnet, daß das Gitter nicht bis zum Horizont verläuft und daß die Farbe der zwischen dem Gitter und dem Horizont verbleibenden Fläche an den sich aus der Farbe des Bodens und aus den enger werdenden Linien des Gitters ergebenden Farbeindruck angepaßt ist.

24. Verfahren nach Anspruch 18, dadurch gekennzeichnet, daß ein maximaler vorgegebener Höhenunterschied zwischen der Position des Flugzeugs und dem Gitter derart vorgesehen ist, daß bei einer Flughöhe oberhalb dieses maximalen Höhenunterschiedes das Gitter vom dargestellten Boden abgehoben und mit der Position des Flugzeugs im vorgegebenen Höhenunterschied bezüglich der Höhe mitgeführt wird.

25. Verfahren nach Anspruch 24, dadurch gekennzeichnet, daß Teile des Gitters, die über dem Boden schweben, farblich anders gekennzeichnet sind, als Teile, die auf dem Boden aufliegen.

26. Verfahren nach Anspruch 24, dadurch gekennzeichnet, daß das Gitter, wenn es an mindestens einer Stelle des dargestellten Flugraums den Boden berührt, farblich anders gekennzeichnet ist, als wenn es vollständig über dem Boden schwebt.

27. Verfahren nach Anspruch 18, dadurch gekennzeichnet, daß das Gitter unter Berücksichtigung des Höhenverlaufs des Bodens dargestellt ist.

28. Verfahren nach Anspruch 17, dadurch gekennzeichnet, daß ferner erdfeste Navigationseinrichtungen in dem dargestellten Flugraum dargestellt sind.

29. Verfahren nach Anspruch 28, dadurch gekennzeichnet, daß zu überfliegende Festpunkte in Flughöhe rahmenartig dargestellt sind und eine senkrechte Verbindungslinie zum Boden aufweisen.

30. Verfahren nach Anspruch 1, dadurch gekennzeichnet, daß ferner ein Rahmen dargestellt wird, welcher eine Soll-Flugbahn an einer Stelle kennzeichnet, welche im wesentlichen um die Länge des dargestellten Teils der vorausberechneten Flugbahn vor dem Flugzeug liegt.

31. Verfahren nach Anspruch 1, dadurch gekennzeichnet, daß Mittel zur Übertragung von Daten über die vorausberechnete Flugbahn eines weiteren Flugzeugs vorgesehen sind und daß die vorausberechnete Flugbahn des weiteren Flugzeugs in die Darstellung des Flugraums eingeblendet wird.

32. Verfahren nach Anspruch 31, dadurch gekennzeichnet, daß bei einer gefährlichen Annäherung der vorausberechneten Flugbahnen ein Warnsignal und Vorschläge für eine Kursänderung ausgegeben werden.

33. Verfahren nach Anspruch 18, dadurch gekennzeichnet, daß oberhalb einer vorgegebenen Flughöhe ein zweites Gitter oberhalb des Bodens dargestellt wird.

34. Verfahren nach Anspruch 33, dadurch gekennzeichnet, daß das zweite Gitter eine festgelegte Flugebene darstellt und mit der Höhe der Flugebene gekennzeichnet ist.

35. Verfahren nach Anspruch 1, dadurch gekennzeichnet, daß ferner mit Hilfe der Bildwiedergabeeinrichtung weitere Informationen in Form von alphanumerischen Zeichen und/oder Skalen mit Zeigern dargestellt werden.

36. Verfahren nach Anspruch 35, dadurch gekennzeichnet, daß die weiteren Informationen an sich bekannte Flugdaten (Höhe, Geschwindigkeit, Geschwindigkeitsentwicklung, Grenzgeschwindigkeit, Steig/Sink-Geschwindigkeit, Kurs, Nickwinkel, Rollwinkel, Lage des Horizonts) umfassen.

37. Verfahren nach Anspruch 35, dadurch gekennzeichnet, daß ferner mit Hilfe der Bildwiedergabeeinrichtung Warnsignale (Immediate Warnings) dargestellt werden.

38. Verfahren nach Anspruch 35, dadurch gekennzeichnet, daß eine waagerecht verlaufende Skala für den Kurs vorgesehen ist mit einer ersten Marke für den jeweils geflogenen Kurs und mit einer zweiten Marke, welche denjenigen Kurs kennzeichnet, der nach einer Standardausleitung, die zum Zeitpunkt der Darstellung der zweiten Marke begonnen wird, vorausberechnet erreicht wird.

39. Verfahren nach Anspruch 35, dadurch gekennzeichnet, daß zur Nickwinkelanzeige in seitlichen Bereichen des dargestellten Flugraums Marken vorgesehen sind, die bei Geradeausflug auf dem dargestellten Horizont liegen und zusätzlich mit einer numerischen Darstellung des Nickwinkels versehen sind.

40. Verfahren nach Anspruch 1, dadurch gekennzeichnet, daß eine räumliche Darstellung des aus dem gegenwärtigen Flugzustand heraus erreichbaren Luftraums vorgesehen ist.

41. Einrichtung zur Durchführung des Verfahrens nach Anspruch 1, dadurch gekennzeichnet, daß ein Grafikcomputer und eine Bildwiedergabeeinrichtung zur räumlichen Darstellung des Flugraums mit mindestens einem Horizont und der vorausberechneten Flugbahn mit vorausberechneten Positionen und vorausberechneten lagen des Flugzeugs vorgesehen sind.

42. Einrichtung nach Anspruch 41, dadurch gekennzeichnet, daß die Bildwiedergabeeinrichtung einen zweidimensionalen Bildschirm einer Kathodenstrahlröhre, einer LCD- oder einer Plasma-Anordnung umfaßt.

43. Einrichtung nach Anspruch 41, dadurch gekennzeichnet, daß die Bildwiedergabeeinrichtung Mittel zur dreidimensionalen, insbesondere holographischen Darstellung, enthält.

44. Einrichtung nach Anspruch 41, dadurch gekennzeichnet, daß die Bildwiedergabeeinrichtung zwei bildliche Darstellungen erzeugt, die jeweils einem Auge eines Piloten zuführbar sind.

45. Einrichtung nach Anspruch 44, dadurch gekennzeichnet, daß die Bildwiedergabeeinrichtungen mit Vorrichtungen zur Befestigung am Kopf des Pilotens versehen sind.

## Claims

1. Method for representing flight management information for an aircraft, involving the production of a three-dimensional representation of the flying space having at least one horizon with the aid of an imaging device, characterised in that the three-dimensional representation also includes the predicted flight path of the aircraft with predicted positions and predicted attitudes of the aircraft at different points in time.

2. Method according to claim 1, characterised in that the representation of the predicted flight path is produced for a distance which the aircraft covers in a preset time, preferably a few seconds.

3. Method according to claim 2, characterised in that the representation of the predicted flight path consists of a series of symbols which within the represented flying space occupy the predicted position and the predicted attitude of the aircraft in relation to the flying space at different points in time.

4. Method according to claim 3, characterised in that a first symbol relating to height and attitude is calculated on the basis of the predicted flight path, that the first symbol is orientated on the basis of the actual heading and that further symbols are orientated on the basis of the predicted flight track.

5. Method according to claim 4, characterised by in each case forming a symbol of a triangular disc of finite thickness which is located in the predicted path of the extended undercarriage, with one vertex pointing in the predicted flight direction.

6. Method according to claim 3, characterised in that the symbols are given a colour depending on the velocity predicted for the respective symbol.

7. Method according to claim 6, characterised in that in a normal velocity range the symbols are in a first colour, in the lower threshold velocity range a second colour, and in the upper threshold velocity range a third colour.

8. Method according to claim 6, characterised in that the velocity is predicted from the air speed measured.

9. Method according to claim 1, characterised in that a wind shear warning is produced by flashing and/or a change in colour of at least part of the represented predicted flight path.

10. Method according to claim 3, characterised in that the representation of the flying space includes a representation of the ground and that the shadow of the symbols cast by an imaginary light source situated vertically above the symbols is represented on the ground.

11. Method according to claim 10, characterised in that in the event that the vertex of the predicted flight path and the shadow coincide a warning signal is generated.

12. Method according to claim 11, characterised in that the warning signal includes at least a flashing and/or a change in colour of the represented predicted flight path in the region of the vertex.

13. Method according to claim 1, characterised in that the predicted flight path is calculated from the actual data (velocity, heading, altitude, rate of climb, attitude) and the accelerations operating on the aircraft.

14. Method according to claim 1, characterised in that the predicted flight path is calculated on the basis of a mathematical model, the actual data and the control entries (aileron settings, engine performance).

15. Method according to claim 14, characterised in that the mathematical model is enhanced by measuring the controlled variables and the aircraft's behaviour during the flight.

16. Method according to claim 1, characterised in that the predicted flight path is calculated using the techique of neuronal grids.

17. Method according to claim 1, characterised in that a representation of the ground is provided.

18. Method according to claim 17, characterised in that the three-dimensional representation of the flying space includes a grid terrain fixed in the earth and orientated geographically or magnetically, and that the lines forming the grid, based on the flying space, are a constant distance apart, preferably a nautical mile or a geodetic angular minute.

19. Method according to claim 17, characterised in that the representation of the flying space includes a representation of the respective available approach path(s).

20. Method according to claim 19, characterised in that in addition the runway centerline is depicted lengthened in the direction of approach.

21. Method according to claim 17, characterised in that the three-dimensional representation of the flying space includes a representation of an ideal-path channel for a landing approach.

22. Method according to claim 17, characterised in that additional features on the ground (mountains, buildings, runways, traffic routes) are included in the three-dimensional representation of the flying space.

23. Method according to claim 18, characterised in that the grid does not extend as far as the horizon and that the colour of the area remaining between the grid and the horizon is adapted to the perceived colour resulting from the colour of the ground and from the narrowing lines of the grid.

24. Method according to claim 18, characterised in that a maximum preset height difference is provided between the position of the aircraft and the grid, such that if the aircraft flies at an altitude above this maximum height difference the grid is raised from the represented ground and is carried along with the position of the aircraft at the preset height difference relative to the height.

25. Method according to claim 24, characterised in that parts of the grid that hover above the ground are identified in a different colour from parts that are lying on the ground.

26. Method according to claim 24, characterised in that the grid, when it touches the ground at at least one point of the depicted flying space, is identified in a different colour from when it hovers entirely above the ground.

27. Method according to claim 18, characterised in that the relief of the terrain is taken into consideration when representing the grid.

28. Method according to claim 17, characterised in that in addition fixed navigation equipment on the ground is represented in the depicted flying space.

29. Method according to claim 28, characterised in that reference points at flying height that have to be overflown are represented in outline and have a vertical line connecting them to the ground.

30. Method according to claim 1, characterised in that an outline is also represented that identifies an ideal flight path at a point situated in front of the aircraft by substantially the length of the represented part of the predicted flight path.

31. Method according to claim 1, characterised in that means are provided for communicating data about the predicted flight path of another aircraft and that the predicted flight path of the other aircraft is superimposed on the representation of the flying space.

32. Method according to claim 31, characterised in that in the event of a dangerous proximity of the predicted flight paths a warning signal and suggestions for a change of course are issued.

33. Method according to claim 18, characterised in that above a preset flying height a second grid is represented above the ground.

34. Method according to claim 33, characterised in that the second grid represents a fixed flying level and is identified by the height of the flying level.

35. Method according to claim 1, characterised in that the imaging device is also used to represent additional information in the form of alphanumeric symbols and/or scales with pointers.

36. Method according to claim 35, characterised in that the additional information includes per se known flight data (altitude, speed, speed evolution, rate of climb/vertical descent, course, pitch angle, roll angle, and position of the horizon).

37. Method according to claim 35, characterised in that the imaging device is also used to represent warning signals (immediate warnings).

38. Method according to claim 35, characterised by the provision of a horizontal scale for the course with a first marker for the respective course being flown and with a second marker identifying the course that it is predicted will be reached following a standard roll commenced at the point in time at which the second marker was represented.

39. Method according to claim 35, characterised by the provision of markers in lateral regions of the represented flying space for displaying the pitch angle, which markers are located on the represented horizon when the aircraft is flying in a straight line and are additionally provided with a digital representation of the pitch angle.

40. Method according to claim 1, characterised by the provision of a three-dimensional representation of the air space that can be reached from the current flight status.

41. System for carrying out the method of claim 1, characterised by the provision of a graphics computer and an imaging device for three-dimensional representation of the flying space having at least one horizon and the predicted flight path and predicted positions and predicted attitudes of the aircraft.

42. System according to claim 41, characterised in that the imaging device includes a two-dimensional screen of a cathode ray tube, LCD assembly or plasma assembly.

43. System according to claim 41, characterised in that the imaging device contains -means for three-dimensional representation, especially holographic representation.

44. System according to claim 41, characterised in that the imaging device generates two pictorial representations, each of which can be sent to one eye of a pilot.

45. System according to claim 44, characterised in that the imaging devices are provided with means for attaching them. to the head of the pilot.

## Revendications

1. Procédé de représentation et d'affichage des informations concernant la conduite de vol d'un avion, selon lequel il est formé à l'aide d'un appareil reproducteur d'image une vue spatiale du champ de vol comportant au moins un horizon, procédé caractérisé en ce que cette vue spatiale en trois dimensions comporte, en plus, l'estimation de la ligne de vol prévue de l'avion ainsi que de sa position et de son assiette à divers instants.

2. Procédé selon la revendication 1, caractérisé en ce que la ligne de vol prévue est affichée sur la distance que l'avion parcourt en un temps prédéterminé, avantageusement en quelques secondes.

3. Procédé selon la revendication 2, caractérisé en ce que l'image de la ligne de vol prévue est composée d'une série de symboles, qui prennent dans le champ de vol affiché la position et l'assiette de l'avion estimées pour divers instants.

4. Procédé selon la revendication 3, caractérisé en ce qu'un premier symbole donnant l'altitude et l'assiette est calculé en fonction de la ligne de vol prévue, en ce que ce premier symbole est orienté vers le cap effectivement établi et en ce que les autres symboles sont orientés vers le cap prévu par rapport au sol.

5. Procédé selon la revendication 4, caractérisé en ce que chaque symbole est formé par une plaquette triangulaire d'épaisseur limitée, qui se trouve sur le trajet du train d'atterrissage sorti, un sommet montrant la direction de vol prévue.

6. Procédé selon la revendication 3, caractérisé en ce que les symboles présentant une couleur dépendant de la vitesse prévue pour chacun d'eux.

7. Procédé selon la revendication 6, caractérisé en ce que, dans la plage des vitesses normales, les symboles ont une première couleur, au voisinage de la limite inférieure de la vitesse une seconde couleur et ils ont une troisième couleur au voisinage de la limite supérieure de la vitesse.

8. Procédé selon la revendication 6, caractérisé en ce que le calcul de la vitesse prévue est fait à partir de la vitesse propre relevée.

9. Procédé selon la revendication 1, caractérisé en ce qu'un gradient vertical de vent est signalé par un clignotement et/ou un changement de couleur d'une partie au moins de l'image de la ligne de vol prévue.

10. Procédé selon la revendication 3, caractérisé en ce que la vue du champ de vol comporte une image du sol et en ce que cette image montre l'ombre d'un symbole, projetée sur le sol par une source lumineuse imaginaire située à l'aplomb de ce symbole.

11. Procédé selon la revendication 10, caractérisé en ce qu'un signal d'alarme est affiché si l'extrémité antérieure de la ligne de vol prévue coïncide avec l'ombre.

12. Procédé selon la revendication 11, caractérisé en ce que le signal d'alarme est au moins un clignotement et/ou un changement de couleur de l'extrémité antérieure,ou sommet, de la ligne de vol prévue.

13. Procédé selon la revendication 1, caractérisé en ce que la ligne de vol prévue est estimée en fonction des données effectives (vitesse, cap, altitude, vitesse ascensionnelle, angle d'assiette) et des accélérations qui agissent sur l'avion.

14. Procédé selon la revendication 1, caractérisé en ce que la ligne de vol prévue est déterminée sur la base d'un modèle mathématique, des données effectives et des manoeuvres de pilotage (position des gouvernes, puissance des propulseurs).

15. Procédé selon la revendication 14, caractérisé en ce que le modèle mathématique est amélioré grâce à la mesure des grandeurs de pilotage et du comportement de l'avion pendant le vol.

16. Procédé selon la revendication 1, caractérisé en ce que la ligne de vol prévue est déterminée par la méthode des réseaux neuronaux.

17. Procédé selon la revendication 1, caractérisé en ce qu'on prévoit une représentation du sol.

18. Procédé selon la revendication 17, caractérisé en ce que la vue du champ de vol dans l'espace (voie tridimensionnelle) comprend une grille solidaire de ce sol et orientée géographiquement ou magnétiquement, et en ce que les traits qui forment cette grille ont par rapport au champ de vol, un écartement constant, égal avantageusement à un mille nautique ou à une minute d'angle géodésique.

19. Procédé selon la revendication 17, caractérisé en ce que la vue du champ de vol affiche l'image de la ou des pistes d'atterrissage existante(s).

20. Procédé selon la revendication 19, caractérisé en ce que l'axe de la piste d'atterrissage est représenté prolongée dans le sens d'une approche.

21. Procédé selon la revendication 17, caractérisé en ce que la vue du champ de vol dans l'espace comporte l'image d'un couloir délimitant une trajectoire d'atterrissage assignée.

22. Procédé selon la revendication 17, caractérisé en ce que d'autres particularités du sol (collines, bâtiments, voies ferrées, voies de communication) sont incorporées dans la vue du champ de vol dans l'espace.

23. Procédé selon la revendication 18, caractérisé en ce que la grille n'est pas prolongée jusqu'à l'horizon et en ce que la couleur de la surface qui se trouve entre cette grille et l'horizon est adaptée à la coloration créée par la couleur du sol et par les traits de plus en plus resserrés de la grille.

24. Procédé selon la revendication 18, caractérisé en ce que la différence de hauteurs entre la grille et la position de l'avion a une valeur maximale prédéterminée, de façon que, lorsque la différence d'altitude de l'avion est supérieure à cette valeur maximale, la grille soit éloignée du sol et amenée à la hauteur correspondant à ladite différence maximale prédéterminée par rapport à la position de l'avion.

25. Procédé selon la revendication 24, caractérisé en ce que les parties de la grille qui flottent au-dessus du sol sont repérées par une couleur autre que celles des parties de grille qui reposent sur le sol.

26. Procédé selon la revendication 24, caractérisé en ce que, si la grille touche le sol en au moins un endroit du champ de vol, elle est repérée par une couleur autre que lorsqu'elle plane entièrement au-dessus de ce sol.

27. Procédé selon la revendication 18, caractérisé en ce que la grille est représentée compte tenu des variations du niveau du sol.

28. Procédé selon la revendication 17, caractérisé en ce que des auxiliaires de navigation, fixés au sol, sont aussi affichés dans la vue du champ de vol.

29. Procédé selon la revendication 28, caractérisé en ce que les points fixes à survoler sont représentés, sous la forme de contours fermés ou cadres, à l'altitude de vol et comportant un trait vertical de liaison avec le sol.

30. Procédé selon la revendication 1, caractérisé en ce que l'image montre encore, un cadre, qui délimite une ligne de vol assignée et se trouve à un emplacement situé en avant de l'avion et à une distance sensiblement égale à la longueur de la partie affichée de la ligne de vol prévue.

31. Procédé selon la revendication 1, caractérisé en ce qu'il est prévu un dispositif destiné à transmettre à un autre avion les données relatives à la ligne de vol prévue et en ce que la ligne de vol prévue pour cet autre avion est affichée sur la vue du champ de vol.

32. Procédé selon la revendication 31, caractérisé en ce qu'un signal d'alarme et des instructions de modification du cap sont affichés si les lignes de vol prévues se rapprochent dangereusement.

33. Procédé selon la revendication 18, caractérisé en ce que, au-delà d'une altitude de vol prédéterminée, une seconde grille est affichée au-dessus du sol.

34. Procédé selon la revendication 33, caractérisé en ce que la seconde grille affiche une altitude de vol fixe et est repérée par la valeur de cette altitude.

35. Procédé selon la revendication 1, caractérisé en ce que d'autres informations sont affichées/à l'aide du dispositif reproducteur d'images, sous forme de symboles alphanumériques et/ou d'échelles graduées portant des repères.

36. Procédé selon la revendication 35, caractérisé en ce que les autres informations comprennent les données de vol connues (altitude, vitesse, évolution de cette vitesse, limite de la vitesse, vitesse de montée et de descente, cap, angle d'inclinaison longitudinale, angle de roulis, orientation de l'horizon).

37. Procédé selon la revendication 35, caractérisé en ce que des signaux d'alarme "immédiate warnings" sont affichés à l'aide du dispositif reproducteur d'images.

38. Procédé selon la revendication 35, caractérisé en ce que l'image affiche une échelle graduée horizontale de cap, affichant un premier repère pour le cap suivi et un second repère qui affiche le cap estimé qui sera suivi après une manoeuvre à écart-type qui débute au moment où ce second repère est affiché.

39. Procédé selon la revendication 35, caractérisé en ce que des repères destinés à indiquer l'angle d'inclinaison longitudinale sont affichés dans les zones latérales de l'image du champ de vol ; en vol en palier, ces repères se trouvent sur l'horizon affiché et ils affichent en outre numériquement cet angle d'inclinaison longitudinale.

40. Procédé selon la revendication 1, caractérisé en ce que l'on prévoit d'afficher, en une représentation en trois dimensions, l'espace aérien qu'il est possible de parcourir depuis la position de vol actuelle.

41. Equipement pour la mise en oeuvre du procédé selon la revendication 1, caractérisé en ce qu'il comprend un ordinateur graphique et un dispositif récepteur d'images destiné à représenter en trois dimensions le champ de vol, comportant au moins un horizon ainsi que la ligne de vol, la position et l'assiette prévues de l'avion.

42. Equipement selon la revendication 41, caractérisé en ce que le dispositif récepteur est l'écran bidimensionnel d'un tube à rayons cathodiques, d'un dispositif d'affichage par cristaux liquides ou d'un dispositif à plasma.

43. Equipement selon la revendication 41, caractérisé en ce que le dispositif récepteur d'images est un dispositif de reproduction en trois dimensions, notamment par hologrammes.

44. Equipement selon la revendication 41, caractérisé en ce que le dispositif récepteur forme deux images, qui peuvent être présentées chacune à l'oeil respectif du pilote.

45. Equipement selon la revendication 44, caractérisé en ce que les dispositifs récepteurs sont munis de dispositifs destinés à les fixer sur la tête du pilote.
